# EUROPEAN PATENT APPLICATION

(11) **EP 3 406 378 A1**
(43) Date of publication of application: **28.11.2018**
(21) Application number: 17172530.2
(22) Date of filing: 23.05.2017
(51) Int. Cl.: B23C 3/00, B23C 5/14, B23C 5/20, E01B 31/13

(54) **CUTTING INSERT AND MILLING TOOL**

(71) Applicant: WALTER AG, 72072 Tübingen (DE)
(72) Inventor: SCHELLENBERG, Marcus, DE-73072 Tübingen (DE); ENGLER, Martin, DE-72108 Rottenburg (DE)
(74) Representative: Sandvik

(57) **Abstract**

The present invention is directed to a cutting insert (10) comprising a body having a top surface (1), a bottom surface (2) and at least one peripheral edge surface (5) connecting the top (1) and bottom surfaces (2), wherein at least one cutting edge (4) is formed at the intersection of the edge surface (5) with at least one of the top and bottom surfaces (1, 2), the cutting edge (4) having a concave shape. In order to provide a cutting insert with a cutting edge having a shape, which is capable to be mounted on a tool, such that the cutting edge shape substantially corresponds to the profile or the portion of a profile of a work piece to be machined with such an insert and which is in particular more rugged and designed for cutting operations which impart heavy loads on the cutting elements, the at least one relief surface (3) the cutting insert adjacent the edge surface (5) is provided on at least one of the top and bottom surfaces and has a concave shape, thereby forming a cutting edge (4) having the concave shape at the intersection with the edge surface, while the rake surface is provided by the edge surface (5), wherein the wedge angle between the concave relief surface (4) and the edge surface forming the rake surface is larger than 90° along the whole cutting edge (4). The present invention also discloses a method of producing such cutting inserts and a milling tool equipped therewith.

## Description

The present invention is related to a cutting insert comprising a body having a top surface, a bottom surface and at least one peripheral edge surface connecting the top and bottom surfaces, wherein at least one cutting edge is formed at the intersection of the edge surface with at least one of the top and bottom surfaces, the cutting edge having a concave shape.

A cutting insert according to the aforementioned kind is disclosed by EP 0 582 981 A1.

The present invention is also directed to a method of producing a cutting insert of the above-mentioned kind, and to a milling tool, which is at least partly equipped with the cutting inserts according to the present invention.

The cutting insert disclosed by the above-mentioned prior art is, in the top view on the top or bottom surface, of a polygonal, in particular a rhombic shape and comprises concave cutting edges extending between adjacent corners of the rhombic basic shape.

The wedge angle between the edge surfaces and the rake surface is generally smaller than 90° and its largest value along a narrow land portion adjacent the cutting corners, while in between the cutting corner the land forms an angle of fairly less than 90° with the adjacent edge surface. The central part of the top and bottom surface, in a lateral view towards the edge surfaces, is raised above the cutting edges and cutting corners and is designed as an abutment surface when clamping the cutting insert within a corresponding insert seat of a cutting tool. The top and bottom surfaces are designed as rake surfaces while the edge surfaces are designed as relief surfaces.

The cutting insert of the above-mentioned type is provided for cutting applications with light feed and light depth. The positive rake angle provided by the slightly inward inclined land surface and the even more positive rake angle provided by the rake surface portions adjacent the land result in a rather weak structure of the cutting edges which is in line with the intended use for light feed and cutting depth, but such a design is not suitable for heavy load applications.

Moreover, with the radial mounting for which the cutting insert of the afore mentioned prior art is designed, the resulting shape of the work piece machined by such cutting insert is in no way related to the concave shape of the cutting edges which have a rather large radius of curvature and in particular, when engaging a work piece, the plane defined by the arc shaped cutting edge is nearly parallel to the surface of the work piece.

In view of this prior art, it is the object of the present invention to provide a cutting insert with a cutting edge having a shape, which is capable to be mounted on a tool, such that the cutting edge shape substantially corresponds to the profile or the portion of a profile of a work piece to be machined with such an insert and which is in particular more rugged and designed for cutting operations which impart heavy loads on the cutting elements.

This object is achieved by a cutting insert according to claim 1 which is characterized by the fact that at least one relief surface adjacent a cutting edge is provided on at least one of the top and bottom surfaces, wherein the relief surface has a concave shape, thereby forming a cutting edge having a concave shape, while the rake surface is provided by the edge surface, wherein the wedge angle between the concave relief surface and the edge surface forming the rake surface is larger than 90° along the whole length of the cutting edge.

Accordingly, the cutting insert according to the present invention is designed with a particular negative cutting geometry, i.e. a wedge angle at the cutting edge, which is larger than 90°. Moreover, it is designed for tangential mounting, i.e. the cutting insert is to be mounted on the cutting tool such that the edge surface acts as a rake surface while the top and bottom surfaces, more particularly concave portions of the top and bottom surfaces adjacent the cutting edge, are acting as relief surfaces.

In a rotating tool, one dimension of the two dimensional top or bottom surfaces of such inserts would extend along a substantial tangential direction, which is why such cutting inserts are called "tangential" inserts as opposed to "radial" or radially mounted cutting inserts in which the narrower edge surface would form the relief surface.

It may be noted, that without any structure on the top and bottom surfaces or on the edge surfaces, any rake face and relief surface could not be unambiguously identified, i. e. either of these faces could be considered as a rake surface or relief surface.

However with the concave face portion on the top or bottom side adjacent a cutting edge together with the wedge angle larger than 90°, there can be recognized that such a concave structure cannot reasonably be provided for a rake surface by a radial mounting, because the cutting would then have less support by the body adjacent the edge surface without providing any advantage.

A corresponding method for producing such a cutting insert is characterized by the step of grinding the relief surfaces by means of a grinding tool, while in contrast, the more detailed structures along the cutting edge of the above discussed prior art cutting insert appears to be produced by means of pressing a green body with a corresponding shape and sintering the same.

With a corresponding milling tool, the cutting insert is tangentially mounted which results in a shape of a surface portion of a work piece which is engaged by the cutting insert and thereby gets the same concave shape as the cutting edge, disregarding a slight distortion due to a slight tilting of the edge surface in order to provide the necessary relief angle by the concave portion of the top or bottom surface.

In addition, due to the tangential mounting and the negative cutting edge geometry (i.e. a wedge angle larger than 90°), the cutting edge is supported by a substantial amount of solid material and is therefore particularly suitable for applications in which heavy loads are applied to the cutting edges as they may occur in cutting operations with large feed rates and large cutting depths.

In one embodiment of a cutting insert according to the present invention, an imaginary extension of the concave relief surface away from the associated cutting edge does not intersect with any other surface portion of the respective top or bottom surfaces.

No portions of the top and bottom surfaces, such as for instance pedestals including abutment surfaces for mounting with an insert seat, are thus raised above the imaginary extension of the relief surface, which means that the possible relief angles are only determined by the wedge angle between relief surface and rake surface and are not limited by any further projecting portions of the top and bottom surfaces.

In one embodiment, the relief surface is formed as a part of a rotational surface, in particular as a part of a cylindrical surface.

However, the relief surface may also form part of the surface of a cone.

When preparing the relief surface by grinding, it is thus possible to use either a cylindrical or conical grinding tool which is applied to the top and bottom surface adjacent an edge surface such that a concave relief surface is formed, which intersects with the edge surface to form a concave cutting edge.

In embodiments of cutting inserts having a rotational surface as a relief surface, the axis of such rotational surface extends in a plane perpendicular to the cutting edge and the edge surface.

According to a further aspect, the wedge angle at a cutting edge at the intersection between the bottom line of the concave relief surface and the concave cutting edge is at least 93° and at most 105° which allows to keep the tangentially mounted cutting insert at a reasonable tilting angle with regard to the cutting direction.

Another feature which may be a common feature of all aforementioned embodiments, the top and/or bottom surfaces in their region outside the concave relief surface(s), are flat planar faces, so that these faces may act as abutment surfaces when mounting the cutting insert in a corresponding seat having mating support faces. In addition, some of the edge surfaces, in particular edge surfaces adjacent non-active cutting edges may act as positioning surfaces abutting on side support surfaces of an insert seat.

In one embodiment, the planar regions of the top surfaces extend along a plane, which is parallel to corresponding planar surface regions of the bottom surface so that the cutting insert may be turned upside down and again mounted in the same insert seat, provided that also any additional side abutment surfaces, in particular edge surfaces of the insert have the appropriate symmetry.

In particular, according to one embodiment the cutting insert is a double sided insert comprising mutually identical and/or mirror symmetric top and bottom surfaces including the concave relief surfaces. This allows providing the cutting insert with a larger number of cutting edges which may be exchanged by indexing or turning the cutting insert within a corresponding insert seat.

The top and bottom surfaces may be formed as equal sided polygonal surfaces, in particular square surfaces, which means that on each of the top and bottom surfaces a relief surface may be formed adjacent each of the sides of the polygon and for a quadrangular cutting insert, there can be provided four cutting edges on each of the top and bottom surfaces.

In principle, it would also be possible to provide the edge surface with a concave relief surface, wherein the top and/or bottom surface would act as or comprise a rake surface. In that case, the cutting insert could be used for conventional radial or axial mounting with either the top surface or the bottom surface acting as the rake surface.

In some embodiments, the concave cutting edge extends between end points which have some distance from adjacent corners of the polygonal periphery. This means that the concave relief surface does not extend over the total length of a polygonal side. However, it is still possible to have the concave relief surfaces extending from one corner to the next adjacent corner of the polygonal periphery.

A central clamping hole may as well be provided, wherein the clamping hole extends through the body from the top to the bottom surface, which allows an easy tangential mounting in corresponding insert seats, wherein the screw hole for a clamping screw is provided behind the concave relief surfaces

The preferred material for the body of the cutting insert is hard metal, in particular sintered carbide.

The method of preparing cutting inserts according to the present invention involves in a first step the pressing and sintering of the cutting insert bodies as principally known in the art. During the pressing step, the concave relief surface on the top and bottom faces, respectively, may already be formed just by pressing.

Alternatively, if the concave relief surfaces are not yet appropriately formed by the pressing and sintering step, the corresponding relief surfaces are ground by means of a grinding tool. In one embodiment, the grinding tool for preparing the relief surfaces comprises a cylindrical grinding body, which is applied to the top and/or bottom surfaces at a slight tilting angle of the axis of such cylindrical grinding body with respect to the top or bottom surface, respectively.

The grinding body may also have the shape of a cone, wherein the tilting angle of the axis of such cone with respect to the top and/or bottom surface is to be adapted such that the desired wedge angle slightly above 90° and less than 110°, in particular between 93° and 105°, is obtained. It would also be possible to use a grinding disk having a part cylindrical profile at the periphery thereof and to move such grinding disk along a path corresponding to the axis of the above mentioned cylindrical grinding body and perpendicular to the cutting edge. This would allow to produce a curvature at the bottom of the concave portion also along the bottom line of the concave surface which bottom line is defined by the succession of the deepest points of the concave relief surface in any section parallel to the associated edge surface. The depth of the concave surface is measured from the plane of the planar portions of the top or bottom surfaces, respectively.

The cutting inserts according to the present invention are in particular designed for a milling tool, which is designed and suited to form a substantial part profile of a rail. The corresponding milling tool has a tool body which is rotatable about a central axis, wherein the tool body comprises a central cylindrical member and a disk shaped member extending radially outward from one end of the cylindrical member, wherein insert seats are arranged on the central cylindrical and/or the disk shaped member, wherein further at least some of the insert seats are equipped with cutting inserts according to any of claims 1 to 15 or at least designed for receiving such cutting inserts. In one embodiment, a plurality of insert seats is distributed along rows which in turn extend substantially along the axial direction of the cylindrical member and the radial direction of the disk shaped member, with a slight circumferential offset of each cutting insert with respect to an adjacent insert of the same row, wherein the offset is less than the circumferential extension of the insert seat and the corresponding length of the insert, respectively.

In one embodiment, a plurality of rows of insert seats are distributed over the periphery of the cylindrical member and the disk shaped member with circumferential spaces between adjacent rows corresponding to at least twice the circumferential extension of the insert seats and/or the corresponding circumferential length of the corresponding inserts, respectively.

In one embodiment of such a milling tool, the cutting inserts in a given row of cutting inserts have remaining gaps between adjacent inserts, which gaps, however, are covered by inserts of adjacent and/or any following rows arranged at different circumferential positions. This means, that the total profile covered by the cylindrical member and the disk shaped member of the milling tool is completely cut by cutting inserts of different rows of cutting inserts wherein each row of cutting inserts cuts different portions of the profile. In addition, also the shape and the extension of relief surfaces of the cutting inserts mounted on such milling tool may gradually change with the axial and/or radial position of the cutting inserts. This may also include cutting inserts which are not formed according to the present invention and may have a known or standard design, wherein in as far as the cutting inserts according to the present invention are concerned, the concave shape and extension of the concave cutting edges for cutting inserts mounted on the cylindrical surface distal from the disk shaped member, may be different from the concave radius and/or extension of a concave cutting edge of a cutting insert arranged closer to the disk shaped member and/or along the disk shaped member, wherein also a concave or convex shape and extension of cutting edges of cutting inserts mounted on the disk shaped member may again vary with regard to their radial position. In summary, all cutting edges of all cutting inserts mounted along the cylindrical member and along the disk shaped member are commonly defining the profile of a work piece to be milled, in particular a rail.

In order to cover such a profile, a part of the cutting inserts may have straight cutting edges and planar relief surfaces while another part of the cutting inserts may even have convex relief surfaces with correspondingly convex shaped cutting edges and in the remainder there are provided cutting inserts according to any of claims 1 to 15 or any combinations thereof.

Further features and aspects of the present invention may be better understood by means of the following description of preferred embodiments and the associated drawings.
Figure 1 is a perspective view of a first embodiment of a cutting insert according to the present invention.
Figure 2 is a perspective view of another embodiment.
Figure 3 is another perspective view of a third embodiment.
Figure 4 shows a perspective view of a milling tool according to the present invention.
Figure 5 shows an enlarged part of the same milling tool.
Figure 6 shows a further enlarged part of the milling tool according to figure 4.

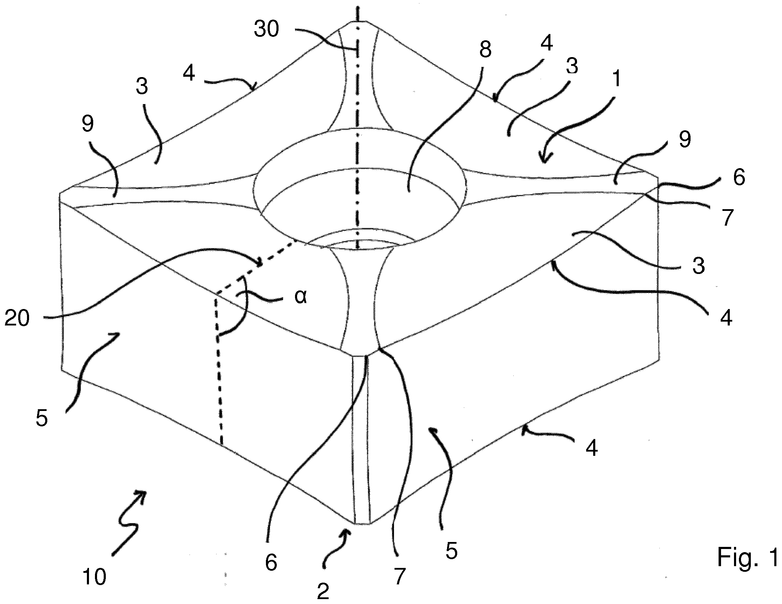

Figure 1 shows a cutting insert 10 formed as a cuboid body with a top surface 1 and a bottom surface 2, which are square (equal sided) faces in the top and bottom view, respectively. The square top surface 1 consists of planar surface portions 9 and concave surface portions, which are forming relief surfaces 3 adjacent a cutting edge 4. The original shape may be thought of as a cuboid body with flat planar top and bottom surfaces which extend parallel to each other and which are connected by four edge faces 5 joining each other at the corners delimiting the (four) polygonal sides and thereby form a continuous circumferentially extending edge face. In addition, there are provided shallow concave relief surfaces 3 which are formed and more particularly ground as indentations in the originally flat planar top and bottom surfaces 1, 2, respectively, such that only narrow parts 9 of the originally planar top and bottom surfaces remain. Still, these surface regions 9 are arranged in a common plane and act as abutment surfaces when applied to the flat bottom support surface of an insert seat and tightened by means of a clamping screw extending through the clamping hole 8. The clamping hole 8 extends centrally from the top surface 1 to the bottom surface 2.

The length of each of the polygonal sides of the cutting insert is substantial larger than the thickness of the cutting insert, which thickness is defined by the distance between the top and bottom surfaces.

In the embodiments shown, the cutting insert has the symmetry of a square in a top view on either of the top or bottom surfaces. Accordingly, any rotation by 90° or a multiple thereof about a central axis 30 results in the same configuration and appearance. The insert could, however, have any polygonal shape in a top view, such as trigonal, pentagonal, hexagonal or octagonal to name but a few. Moreover, the insert may or may not have a clamping hole.

It may be noted, that with any such cutting insert the role of the rake surface, which is in the present case formed by the edge surface 5, and the relief surface 3, formed by the top surface along each cutting edge 4, may principally be exchanged. However, the provision of such a concave rake surface on the top surface forming a wedge angle of more than 90° together with a relief surface formed by the edge surface 5 would not be very meaningful because then the strength and rigidity of the cutting edge 4 would not be improved but would rather be weakened due to the smaller dimensions of the body behind the cutting edge and along and adjacent the edge surface. No particular advantage could be obtained with such a structure, wherein the cutting insert would be mounted as a so called radial or axial cutting insert which would be oriented such that the concave surface 3 acts as a negative rake surface while the edge surface 5 would be a relief surface.

The bottom line 20 indicated for one of the concave relief surfaces 3 is defined by the succession of the deepest points of the concave relief surface 3 in any section parallel to the associated edge surface 5. In the embodiment shown, the bottom line 20 is a central line extending through the central axis 30 of the cuboid body and runs perpendicular to the cutting edge 4. A wedge angle α in the order of 93° to 105° occurs between the bottom line 20 of the relief surface 3 and the edge surface 5 when measured in a plane perpendicular to the cutting edge 4. Of course, in the perspective view of figure 1, the wedge angle α is distorted and appears to be larger than it actually is.

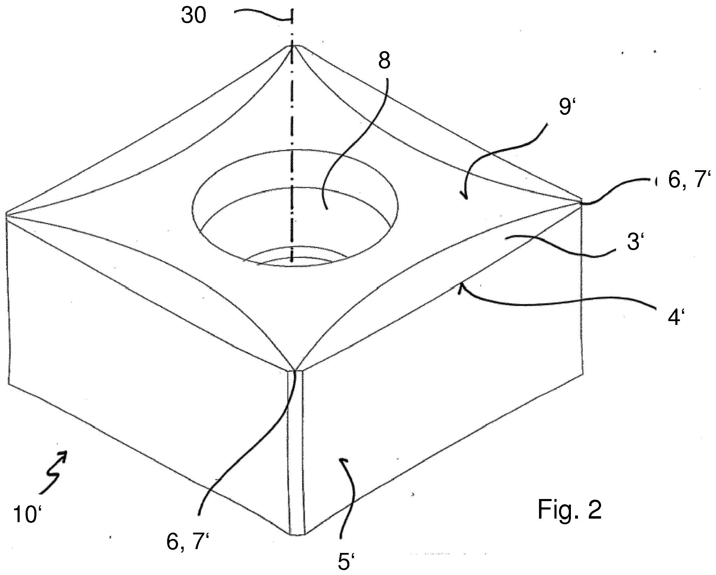

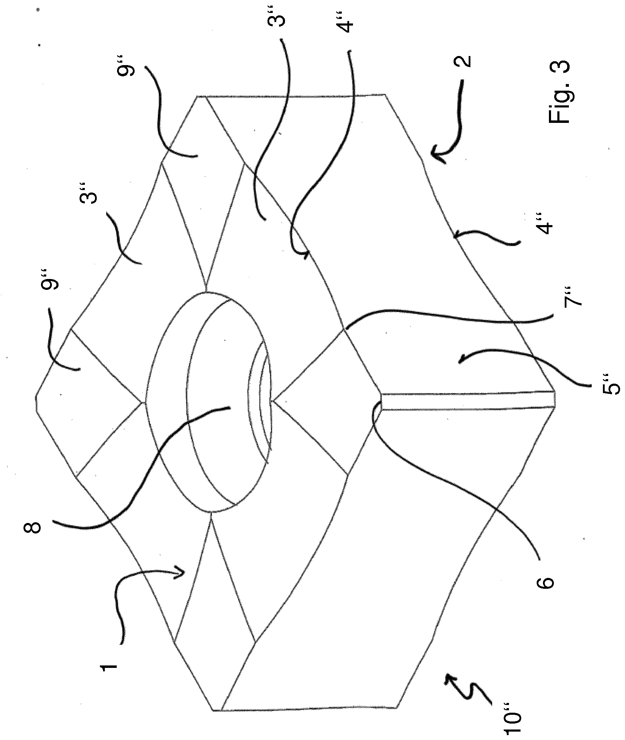

The relief surfaces 3 may be thought of as parts of a rotational surface generated by either a cylindrical or a conical grinding body, the axis of which extends in the plane which is spanned by the bottom line 20 and the central axis of the polygon, which plane is perpendicular to the cutting edge 4. The axis of a corresponding rotating grinding body may be tilted by an appropriate amount with regard to the plane defined by the flat surface portions 9. By varying the tilting angle and the diameter of a corresponding grinding body, various concave relief surfaces 3 may be achieved, such as for instance demonstrated by the further embodiments of figures 2 and 3, respectively.

When prepared with a cylindrical grinding body as described above, any section through the concave relief surface perpendicular to the associated edge surface would generally form a straight line and define the same wedge angle with regard to the edge surface 5. However, the concave relief surface might also appear concave or convex in any section perpendicular to the associated edge surface 5.

The embodiment of figure 2 shows a cutting insert 10' slightly differing from the cutting insert 10 by a different concave surface. In figure 2, the concave shape of the cutting edge 4' is shallower than the cutting edge 4 of the figure 1 embodiment and the extension of the concave relief surface 3' towards the center of the cutting insert is shorter than with the figure 1 embodiment. Therefore, a central surface portion 9' of the figure 2 embodiment remains as a continuous flat and planar surface 9', which extends only with narrow tips up to the corner portions 6 of the corresponding corners of the square basic shape. The planar surface 9' is only recessed along the sides of the square, while the cutting edges 4' extend right to the corner portions so that the end points 7' of the cutting edges 4' are defined by the corner portions 6, while in the figure 1 embodiment the end points 7 of the cutting edge 4 end at some distance to the corners 6.

Another embodiment of a cutting insert 10" is shown in figure 3, in which the cutting edges 4" are even shorter and end at end points 7" at a larger distance from the corners 6 than in the figure 1 embodiment. Moreover, the concave relief surfaces 3" extend up to and into the central clamping hole 8 such that again separate planar surface portions 9" remain in the corner regions of the top and bottom surfaces 1 and 2, respectively.

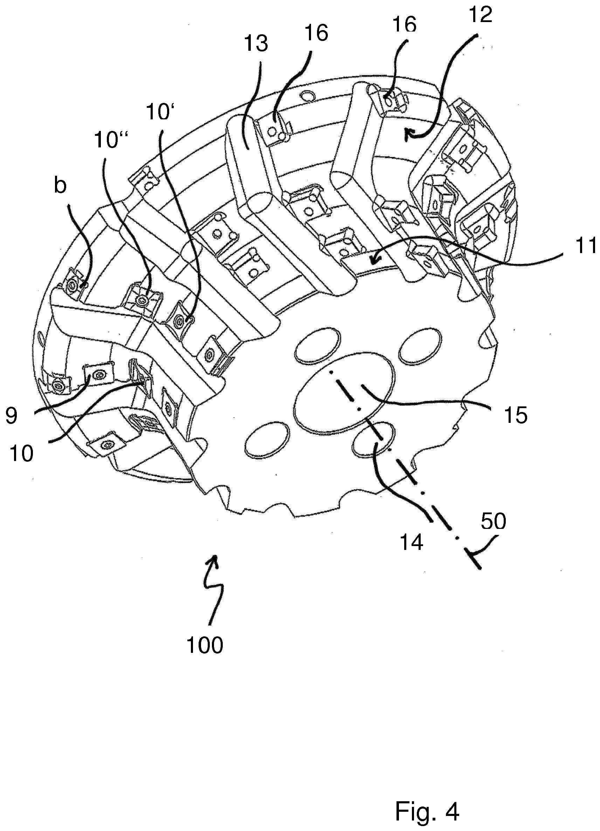

Figure 4 shows a milling tool with a plurality of insert seats 16, a part of which is equipped with the cutting inserts 10, 10' and 10" as described before. The milling tool 100 comprises a cylindrical member 11 and a disk shaped member 12 adjoining the cylindrical member 11 at one axial end thereof and forming a unitary tool body therewith such that a cross section through the milling tool may resemble the capital letter T. The milling tool 100 has a central mounting hole 15 for receiving a spindle or the shaft of a tool holder and further some fixing holes 14 are provided to attach the milling cutter on a mounting surface. The milling cutter is designed for rotating about a central axis 50 thereof.

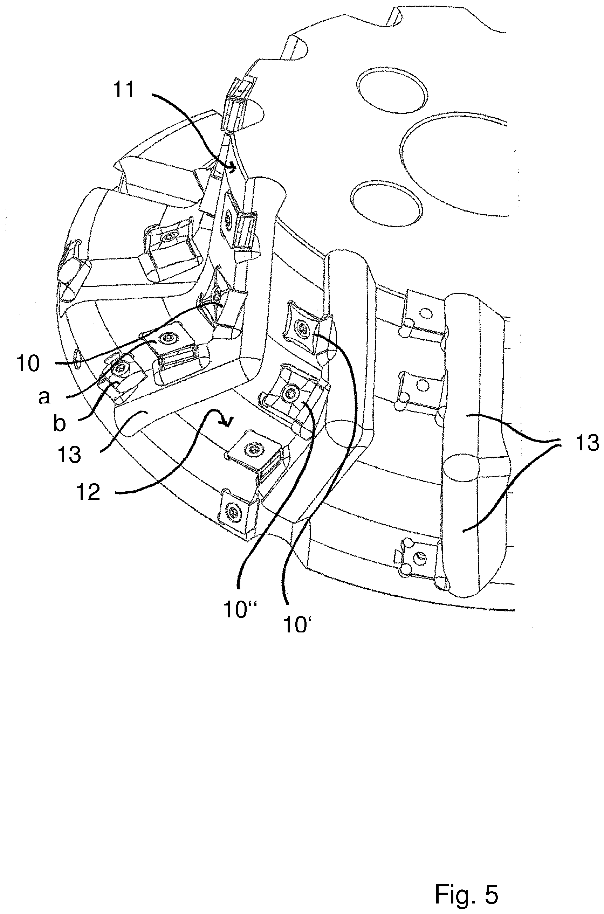

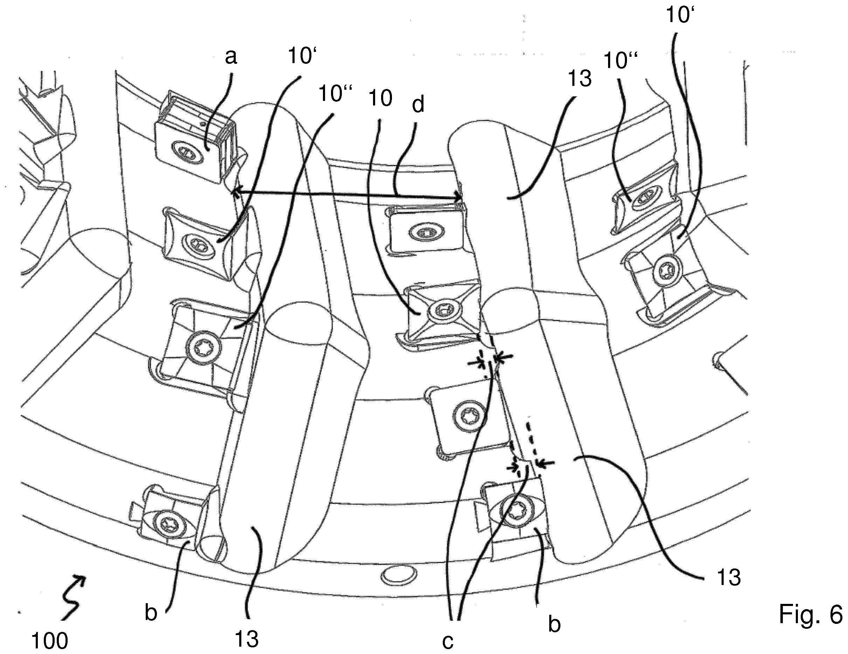

Further details of the milling tool are better visible in figures 5 and 6, respectively.

As can be seen in figures 5 and 6, the milling tool comprises chip spaces or chip grooves 13 extending substantially along the axial direction on the outside of the cylindrical part 11 and along the radial direction on one side of the disk shaped member 12. The chip grooves 13 are slightly tilted in the cylindrical part with respect to the axis 50 and in the disk shaped part 12 tilted with respect to the radial direction which means, that the corresponding insert seats and cutting inserts mounted therein immediately adjacent the chip grooves are slightly offset with respect to each other in the circumferential direction. Accordingly, when starting with an insert or insert seat at the distal end of the cylindrical member, each following cutting insert is arranged more forward of the preceding one in the circumferential direction of cutting so that the radial outermost cutting insert on the disk shaped member is the most forward cutting insert of the group of cutting inserts mounted along the same chip groove 13. In addition, when considering adjacent chip grooves 13 and the cutting seats and cutting inserts mounted therein, the respective cutting inserts are offset with respect to the preceding or following group of inserts such as to cover the gaps remaining between the preceding or next preceding group of inserts.

As can be seen in figure 5 and 6, a group of inserts a, 10', 10" and b is provided along the left completely visible chip groove 13 in figure 6, wherein cutting insert a as straight edges and thus does not form a cutting insert according to the present invention and cutting insert b has convex shaped cutting edges and does as well not form a cutting insert according to the present invention. However, the cutting inserts 10' and 10" mounted along the same chip groove 13 between inserts a and b are the cutting inserts 10' of figure 2 and 10" of figure 3, while in the preceding row of cutting inserts mounted along a common groove 13, cutting insert 10 according to the present invention is mounted in an axial and radial position somewhere between cutting inserts 10' and 10" in the following row of inserts.

The circumferential offset c between adjacent cutting inserts mounted along the same chip groove 13 is indicated by dashed lines in the completely visible right chip groove 13 in figure 6. This offset is clearly less than the circumferential length of the inserts 10, 10' and 10". The circumferential offset d between adjacent chip grooves 13 and thus of cutting inserts mounted therein corresponds to more than twice the circumferential length of the inserts 10, 10' and 10", respectively.

In summary, the milling tool is designed and the cutting inserts correspondingly selected and arranged that when applying such a rotating milling tool to a metal bar and moving the tool along the longitudinal direction of such bar, a corresponding profile may be milled on the metal bar such as to form a rail for any vehicle running thereon, wherein different sections of such profile are each formed by individually shaped cutting edges.

For the purpose of original disclosure it is to be noted that any features which may be gathered by a skilled person from the present description, the drawings and the claims, even if only described in connection with particular further features, may be combined individually as well as in arbitrary combinations with any other of the features or groups of features disclosed herein, unless this is explicitly excluded or technical conditions would render such combinations impossible or senseless. The comprehensive, explicit discussion of any combinations of features which might be thought of is dispensed with just for the sake of brevity and legibility of the description and claims.

### Reference numerals

- 1: top surface
- 2: bottom surface
- 3: relief surface
- 3': relief surface
- 3": relief surface
- 4: cutting edge
- 4': cutting edge
- 4": cutting edge
- 5: edge surface
- 5': edge surface
- 5": edge surface
- 6: corner portion
- 7: end point
- 7': end point
- 7": end point
- 8: clamping hole
- 9: planar surface portion region
- 9': central planar surface portion
- 9": planar surface portion
- 10: cutting insert
- 10': cutting insert
- 10": cutting insert
- 11: cylindrical member
- 12: disk shaped member
- 13: chip space / chip groove
- 14: fixing hole
- 15: mounting hole
- 16: insert seat
- 20: bottom line
- 30: central axis of cutting insert
- 50: axis of milling tool
- 100: milling tool

## Claims

1. Cutting insert (10) comprising a body having a top surface (1), a bottom surface (2) and at least one peripheral edge surface (5) connecting the top (1) and bottom surfaces (2), wherein at least one cutting edge (4) is formed at the intersection of the edge surface (5) with at least one of the top and bottom surfaces (1, 2), the cutting edge (4) having a concave shape, **characterized in that** the at least one relief surface (3) adjacent the edge surface (5) is provided on at least one of the top and bottom surfaces and has a concave shape, thereby forming a cutting edge (4) having the concave shape at the intersection with the edge surface, while the rake surface is provided by the edge surface (5), wherein the wedge angle between the concave relief surface (4) and the edge surface forming the rake surface is larger than 90° along the whole cutting edge (4).

2. Cutting insert according to claim 1, that an imaginary extension of the concave relief surface (3) away from the associated cutting edge (4) does not intersect with any other surface portion of the respective top or bottom surface.

3. Cutting insert according to any of claims 1 or 2 that the relief surface is formed as a part of a rotational surface.

4. Cutting insert according to any of the preceding claims that the relief surface is formed as a part of a cylindrical surface.

5. Cutting insert according to any of the preceding claims that the axis of the rotational surface extends in a plane perpendicular to the cutting edge and the edge surface.

6. Cutting insert according to any of the preceding claims that the wedge angle at the intersection between the bottom line and the concave cutting edge is at least 93° and at most 105°.

7. Cutting insert according to any of the preceding claims that the top and/or bottom surfaces in the region outside the concave relief surface(s) are flat planar faces.

8. Cutting insert according to any of the preceding claims that the planar regions of the top surfaces extend along a plane, which is parallel to corresponding planar surface regions of the bottom surface.

9. Cutting insert according to any of the preceding claims that the cutting insert is a double sided insert comprising mutually identical and/or mirror symmetric top and bottom surfaces including the concave relief surfaces.

10. Cutting insert according to any of the preceding claims that the top and bottom surfaces are formed as equal sided polygonal surfaces, in particular square surfaces.

11. Cutting insert according to any of the preceding claims that at least one edge surface comprises the concave relief surface.

12. Cutting insert according to any of the preceding claims that the concave cutting edge (4) extends between end points (7) having some distance from adjacent corners (6) of the polygonal periphery.

13. Cutting insert according to any of the preceding claims that the concave cutting edge extends from one corner (6) to an adjacent corner (6) of the polygonal periphery.

14. Cutting insert according to any of the preceding claims central clamping hole extending through the body from the top to the bottom surface.

15. Cutting insert according to any of the preceding claims the body is consisting of hard metal, in particular of sintered carbide.

16. Method of preparing cutting inserts according to any of the preceding claims, **characterized in that** the relief surface(s) is (are) either pressed within a compression mold or ground by means of a grinding tool.

17. Method according to claim 16, wherein the grinding tool comprises a cylindrical grinding body.

18. Method according to claim 16 or 17, wherein the grinding tool comprises a grinding disk having a part cylindrical profile.

19. Milling tool having a tool body rotatable about a central axis, the tool body comprising a central cylindrical member (11) and a disk shaped member (12) extending radially outward from one end of the cylindrical member (11), and insert seats (16) at least on the central cylindrical and/or the disk shaped member, **characterized in that** at least some of insert seats are designed for receiving cutting inserts according to any of claims 1 to 15.

20. Milling tool according to claim 19, **characterized in that** a plurality of insert seats is distributed along rows extending along the axial direction of the cylindrical member (11) and the radial direction of the disk shaped member (12) with a slight circumferential offset (c) to each adjacent insert, which is less than the circumferential extension of the inserts seats (16).

21. Milling tool according to claim 20, **characterized in that** a plurality of rows of insert seats (16) is distributed over the periphery of the cylindrical member and the disk shaped member with a circumferential spacing (d) between adjacent rows corresponding to at least twice the circumferential extension of the inserts seats.

22. Milling tool according to any of claims 19 - 21, **characterized in that** in a row of cutting inserts there remain gaps between adjacent inserts which are covered by inserts of adjacent and/or following rows at different circumferential positions.

23. Milling tool according to any of claims 19 - 22, **characterized in that** the shape and extension of relief surfaces is gradually changing with the axial position of the cutting inserts.

24. Milling tool according to any of claims 19 - 23, **characterized in that** that a part of the cutting inserts have straight cutting edges and planar relief surfaces while another part of the cutting inserts have convex relief surfaces with correspondingly convex shaped cutting edges.

25. Milling tool according to any of claims 19 - 24, **characterized in that** that the plurality of all its cutting inserts is defining the inner side and top side of the profile of a rail.
